# EUROPEAN PATENT APPLICATION

(11) **EP 3 448 014 A1**
(43) Date of publication of application: **27.02.2019**
(21) Application number: 18190416.0
(22) Date of filing: 23.08.2018
(51) Int. Cl.: H04N 5/225, H04N 5/217, G03B 17/55, G02B 27/00, B64D 47/08

(54) **IMAGE OPTIMIZATION BY AIRCRAFT EXTERIOR CAMERA SYSTEM**

(30) Priority: 25.08.2017 US 201715687320
(71) Applicant: Rosemount Aerospace Inc., Burnsville, MN 55306-4898 (US)
(72) Inventor: BOER, Jonathan, Lakeville, MN Minnesota 55044 (US)
(74) Representative: Dehns

(57) **Abstract**

Exterior camera systems of an aircraft include an image sensor configured to capture image data and one or more processors. The one or more processors are configured to determine a contrast of at least a portion of the captured image data; evaluate whether the contrast is less than a threshold contrast level; and output, in response to the contrast being less than the threshold contrast level, an initiate heating command configured to initiate heating of a camera window positioned between the image sensor and an exterior of the aircraft.

## Description

### BACKGROUND

Many aircraft have camera systems to provide input to pilots. Aircraft camera systems are often equipped with de-icing and anti-fogging systems. Typically, high-power heaters are installed to prevent and eliminate ice and condensation from accumulating on the camera window. These high-power heaters are either powered constantly, or powered based on a temperature condition. When there is no ice or condensation accumulation this wastes power and sacrifices operating life of the components.

### SUMMARY

In one example, an exterior camera system of an aircraft comprises an image sensor configured to capture image data and one or more processors. The one or more processors are configured to determine a contrast of at least a portion of the captured image data; evaluate whether the contrast is less than a threshold contrast level; and output, in response to the contrast being less than the threshold contrast level, an initiate heating command configured to initiate heating of a camera window positioned between the image sensor and an exterior of the aircraft.

In one example, a method comprises capturing image data using an image sensor of an exterior camera system of an aircraft; determining, by one or more processors of the exterior camera system, contrast of at least a portion of the captured image data; evaluating, by the one or more processors, whether the contrast is less than a threshold contrast level; and outputting, in response to determining that the contrast is less than the threshold contrast level, an initiate heating command configured to initiate heating of a camera window positioned between the image sensor and an exterior of the aircraft.

### BRIEF DESCRIPTION OF THE DRAWINGS

FIG. 1 is a perspective view of an aircraft equipped with exterior cameras mounted at various locations on the aircraft.
FIG. 2A-2B are front plan views of the visual displays of the exterior cameras.
FIG. 3 illustrates a series of visual displays of an exterior camera where the camera window is increasingly covered in ice.
FIG. 4 illustrates a series of visual displays of an exterior camera where the camera window is increasingly covered in condensation.
FIG. 5 is a block diagram of an exterior camera system and heater control system of an aircraft.
FIG. 6 is a flow diagram depicting a process for image optimization by an exterior camera system of an aircraft.

### DETAILED DESCRIPTION

Apparatus, systems, and associated methods relate to image optimization using image processing to determine when a camera window heater should be turned on to rid the camera window of ice or condensation. In some applications, such as an aircraft, heaters are turned on constantly during flight due to low temperatures. The constant heat consumes more power than necessary and lowers the operating life of camera system and heating components. Using the apparatus, systems, and associated methods herein, allows for the window heater to only be turned on when the camera window is obscured by ice and/or condensation.

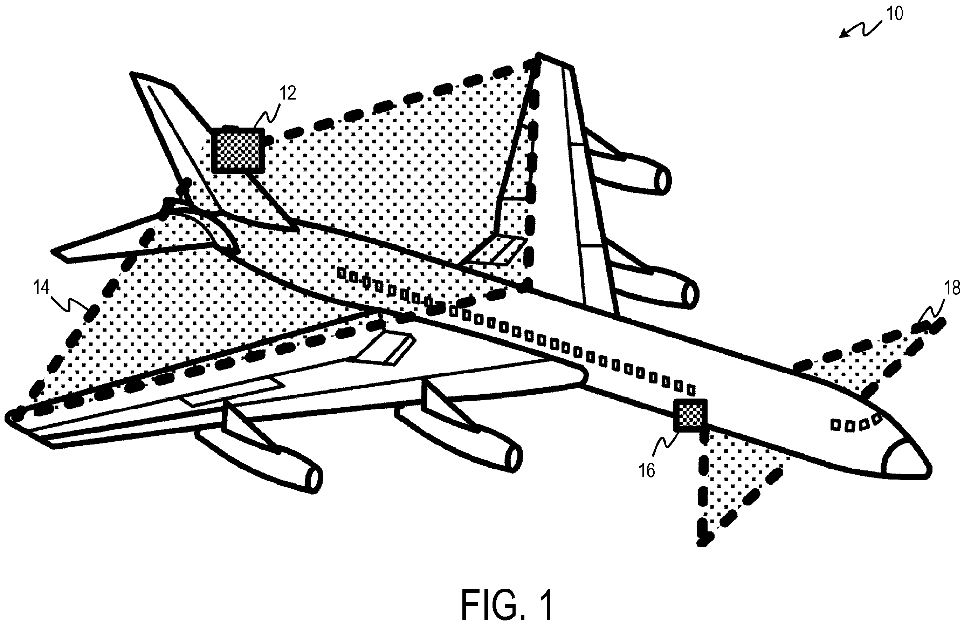

FIG. 1 is a perspective view of aircraft 10 equipped with exterior camera 12 which has a viewable zone 14 and exterior camera 16 which has a viewable zone 18. Exterior camera 12 can capture image data of viewable zone 14. Viewable zone 14 includes the wings, the wheels, and the fuselage of aircraft 10. Exterior camera 16 can capture image data of viewable zone 18. Viewable zone 18 includes the front wheels and fuselage of aircraft 10.

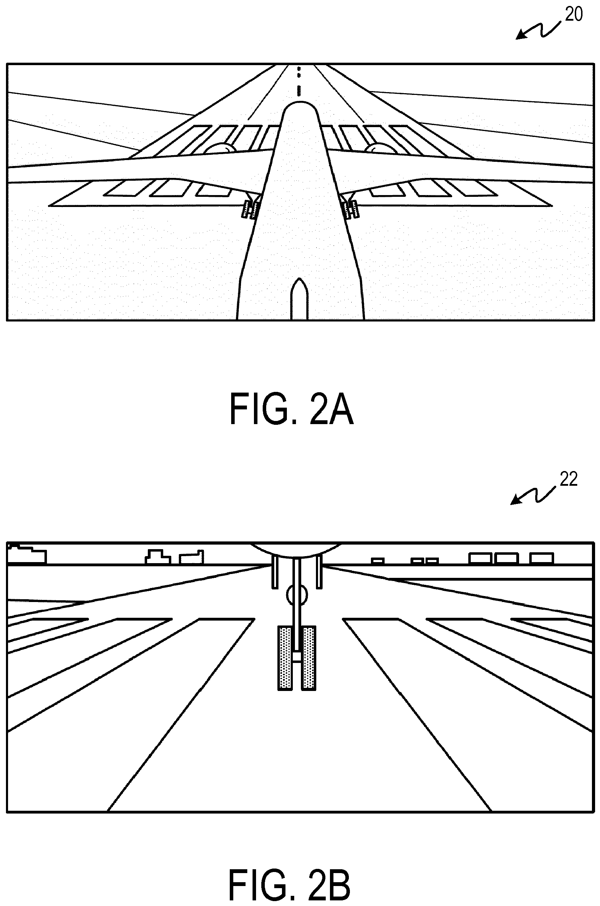

FIG. 2A is a front plan view of visual display 20 from exterior camera 12. As shown, visual display 20 shows a display of viewable zone 14 includes the rear wheels, the wings, and the fuselage of aircraft 10. The background of visual display 20 shows a runway.

FIG. 2B is a front plan view of visual display 22 from exterior camera 16. As shown, visual display 22 shows a display of viewable zone 18 including the front wheels and the fuselage of aircraft 10. The background of visual display 22 shows a runway.

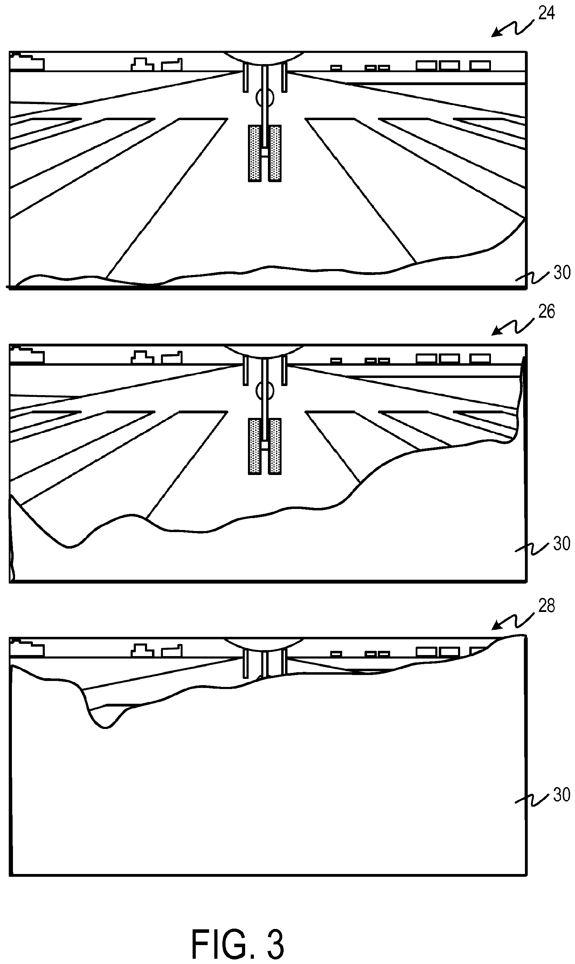

FIG. 3 illustrates a series of visual displays 24, 26, and 28 of exterior camera 16 in which the camera window is increasingly burdened with ice coverage 30. Ice coverage 30 grows from blocking a small portion of visual display 24, to blocking almost the entirety of visual display 28. As ice coverage 30 blocks the view of exterior camera 16, image data becomes generally uniform in areas covered by ice. This general uniformity results in lower contrast in the image data; that is, as ice coverage 30 expands, the contrast of the image from the visual display becomes less. Contrast is greatest in a visual display devoid of ice coverage 30. As ice coverage 30 begins to block the view of exterior camera 16, contrast may be slightly lower or almost unaffected as in visual display 24. In visual display 26, ice coverage 30 has expanded to significantly block exterior camera 16 resulting in a significant drop in contrast. In visual display 28, ice coverage 30 has expanded to almost the entirety of the image, resulting in even lower contrast.

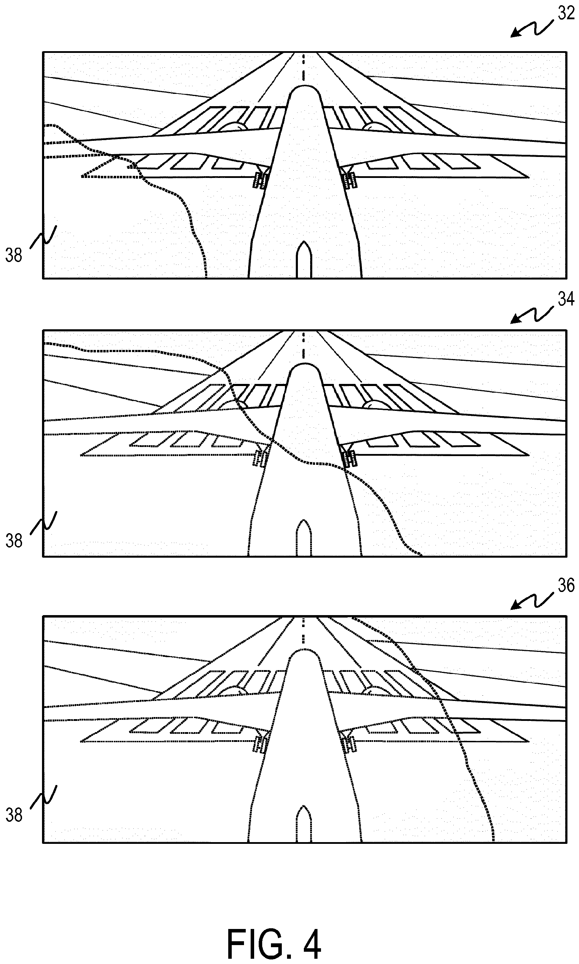

FIG. 4 is series of visual displays 32, 34, and 36 of exterior camera 12 in which the camera window is increasingly burdened with condensation 38. Condensation 38 is indicated by dashed lines. Condensation 38 grows from obscuring a small portion of visual display 32, to blocking almost the entirety of visual display 36. As condensation 38 obscures the view of exterior camera 16, definition between objects and colors in the image data become blurred. This blurring results in lower contrast in the image data; that is, as condensation 38 expands, the contrast of the image from the visual display becomes less. Contrast is greatest in a visual display devoid of condensation 38. As condensation 38 begins to block the view of exterior camera 16, contrast may be slightly lower or almost unaffected as in visual display 32. In visual display 34, condensation 38 has expanded to significantly block exterior camera 16 resulting in a significant drop in contrast. In visual display 36, condensation 38 has expanded to almost the entirety of the image, resulting in even lower contrast.

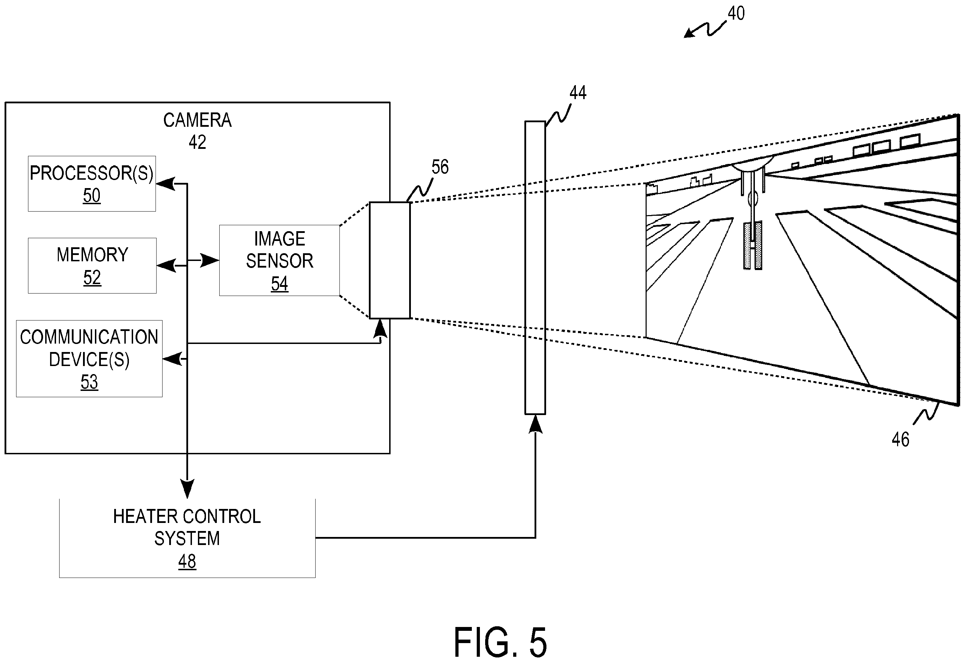

FIG. 5 is a block diagram of exterior camera and heating system 40 including exterior camera system 42, camera window 44, viewable zone 46, and heater control system 48 of an aircraft. Exterior camera system 42 includes one or more processors 50, computer-readable memory 52, one or more communication devices 53, image sensor 54, and camera lens 56.

Camera window 44 protects exterior camera system 42 from elements and conditions external to an aircraft while providing visual access to the exterior of the aircraft. Lens 56 focuses light from viewable zone 46 so that image sensor 54 can capture image data of viewable zone 46. In some examples, the captured image data is stored in computer-readable memory 52.

As illustrated in FIG. 5, exterior camera system 42 includes one or more processors 50. Processors 50 are configured to implement functionality and/or process instructions for execution within exterior camera system 42. For instance, processors 50 can be capable of processing instructions stored at computer-readable memory 52. Examples of one or more processors 50 include any one or more of a microprocessor, a controller, a digital signal processor (DSP), an application specific integrated circuit (ASIC), a field-programmable gate array (FPGA), or other equivalent discrete or integrated logic circuitry.

One or more processors 50 can determine various aspects of the captured image data including, brightness, contrast, color, and other image data properties. In one example, contrast is determined along an edge of a known object in the image data. The known object can be a wing, the fuselage, or other part of the aircraft that remains in viewable zone 46. Edge-detection can be used to find the known object. If edge-detection fails, one or more processors 50 can determine that the contrast of the image data is below a threshold. In one example, the contrast is an average contrast of the image data. One or more processors 50 can evaluate whether the contrast of the image data is below a threshold. In response to determining the contrast is below a threshold, one or more processors 50 can output an initiate heating command. The initiate heating command can be configured to initiate heating of camera window 44. The command signal can be received by heater control system 48, which will then initiate heating of camera window 44. In response to determining the contrast is above the threshold, one or more processors 50 can output a terminate heating command. The terminate heating command can be configured to terminate heating of camera window 44. The command signal can be received by heater control system 48, which will then terminate heating of camera window 44.

Computer-readable memory 52 can be configured to store information within exterior camera system 42 during operation. Computer-readable memory 52, in some examples, is described as a computer-readable storage medium. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, computer-readable memory 52 is a temporary memory, meaning that a primary purpose of computer-readable memory 52 is not long-term storage. Computer-readable memory 52, in some examples, is described as a volatile memory, meaning that computer-readable memory 52 does not maintain stored contents when power to exterior camera system 42 is removed. Examples of volatile memories can include random access memories (RAM), dynamic random access memories (DRAM), static random access memories (SRAM), and other forms of volatile memories. In some examples, computer-readable memory 52 is used to store program instructions for execution by processors 50. Computer-readable memory 52, in certain examples, is used by software applications running on exterior camera system 42 to temporarily store information during program execution, such as determining a contrast of at least a portion of an image, or determining the contrast is below a contrast threshold.

Computer-readable memory 52, in some examples, also include one or more computer-readable storage media. Computer-readable memory 52 can be configured to store larger amounts of information than volatile memory. Computer-readable memory 52 can further be configured for long-term storage of information. In some examples, computer-readable memory 52 include non-volatile storage elements. Examples of non-volatile storage elements can include magnetic hard discs, optical discs, floppy discs, flash memories, or forms of electrically programmable memories (EPROM) or electrically erasable and programmable (EEPROM) memories.

Exterior camera system 42, as illustrated in FIG. 5, also includes one or more communication devices 53. Exterior camera system 42, in one example, utilizes communication devices 53 to communicate with external devices via one or more wired or wireless networks, or both. Communication devices 53 can include a network interface card, such as an Ethernet card, an optical transceiver, a radio frequency transceiver, or any other type of device that can send and receive information. Other examples of such network interfaces can include Bluetooth, 3G, 4G, and WiFi radio computing devices, as well as Universal Serial Bus (USB).

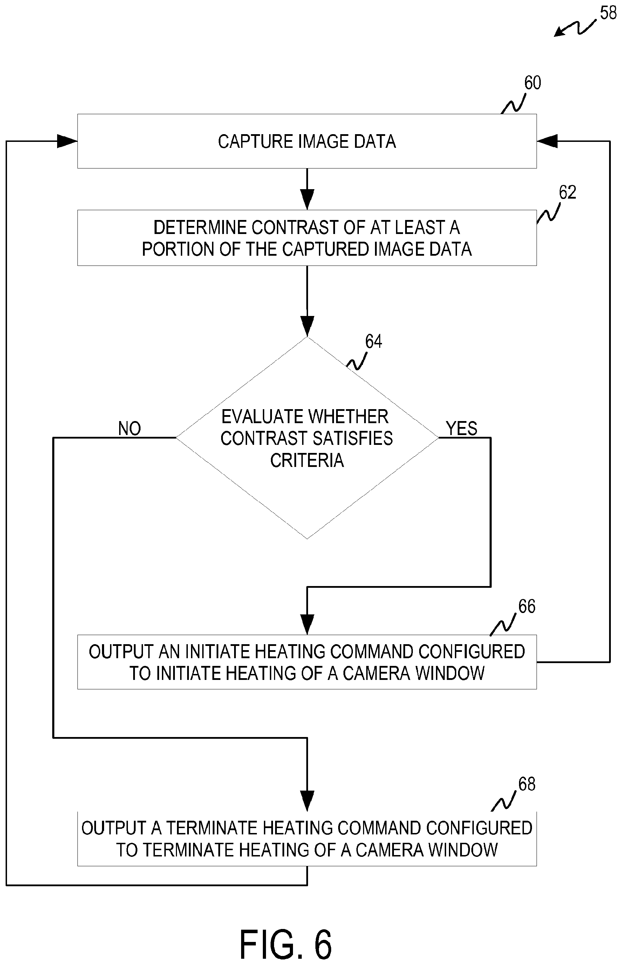

FIG. 6 is flow diagram depicting a process 58 for image optimization by an exterior camera system of an aircraft. For purposes of clarity and ease of discussion, the example operations are described below within the context of exterior camera system 42 of FIG. 5.

At step 60, image data is captured using image sensor 54. In some examples, the captured image data is be stored in computer-readable memory 52. The image data can be image data of a viewable zone of an exterior camera. The image data can include known objects, such as wings, fuselage, wheels, and other parts of an aircraft. At step 62, the contrast of at least a portion of the captured image data is determined using one or more processors 50. In one example, the contrast is determined along a known object in the image data. The known object can be a wing, the fuselage, or other part of the aircraft that remains in a viewable zone of the exterior camera. In one example, the contrast is determined by using an average contrast of the image data.

At step 64, the contrast is evaluated as to whether it satisfies criteria. In one example, the contrast evaluated as to whether it is less than a threshold contrast level using one or more processors 50. In one example, the threshold contrast level is a predetermined threshold contrast level. In a further example, the threshold contrast level is determined from image data captured when it is known there is nothing obscuring the camera window, such as ice or condensation. In a still further example, evaluating whether the contrast is less than a threshold contrast level includes comparing a second contrast determined at a point in time after an initiate heating command has been output to a third contrast determined after the second contrast, to determine if the third contrast is greater than the second contrast. If the contrast does not improve over time, it can be an indication that ice and condensation has been cleared, or ice and condensation are not causing the lack of contrast. If the contrast meets the criteria (i.e. is below the contrast level and/or the third contrast is greater than the second contrast), process 58 proceeds from step 64 to step 66. At step 66, an initiate heating command configured to initiate heating of camera window 44 is output. In some examples, the heating command is output to heater control system 48. Process 58 then returns to step 60. If the contrast fails to satisfy the criteria (i.e. is above the threshold and/or the third contrast is not greater than the second contrast), process 58 proceeds from step 64 to step 68. At step 68, a terminate heating command configured to terminate heating of camera window 44 is output. In some examples, the terminate heating command is output to heater control system 48. Process 58 then proceeds back to step 60.

Accordingly, implementing techniques of this disclosure, image optimization using an exterior camera system of an aircraft can determine when a camera window heater needs to be turned on. Using the exterior camera system described herein a window heater can be turned on and off based upon the contrast of image data captured by the camera system. This allows the window heater to only be turned on when needed, using less power and extending the operating life of affected components.

### Discussion of Possible Embodiments

The following are non-exclusive descriptions of possible embodiments of the present invention.

An exterior camera system of an aircraft can comprise an image sensor configured to capture image data; and one or more processors can be configured to determine a first contrast of at least a portion of the captured image data; evaluate whether the first contrast is less than a threshold contrast level; and output, in response to the first contrast being less than the threshold contrast level, an initiate heating command configured to initiate heating of a camera window positioned between the image sensor and an exterior of the aircraft.

The exterior camera system of the preceding paragraph can optionally include, additionally and/or alternatively, any one or more of the following features, configurations and/or additional components:

The processor can be further configured to output, in response to the first contrast being greater than or equal to the threshold contrast level, a terminate heating command configured to terminate heating of the camera window.

The determined contrast can be a contrast along an edge of a known object within the captured image data.

Edge-detection can be used to determine and evaluate the first contrast along an edge of a known object within the captured image data.

The determined contrast can be an average contrast of the image data.

The one or more processors can be further configured to determine a second contrast of the at least a portion of the captured image data at point in time after the initiate heating command has been output; determine a third contrast of the at least a portion of the captured image data at point in time after the second contrast is determined; and evaluate whether the third contrast is greater than the second contrast.

The one or more processors can be further configured to output, in response to the third contrast being equal to the second contrast, a terminate heating command configured to terminate heating of the camera window.

The one or more processors can be further configured to output, in response to the third contrast being equal to the second contrast and the and the second contrast being above the contrast threshold level, a terminate heating command configured to terminate heating of the camera window.

The threshold level can be a predetermined threshold level.

The image sensor can be configured to capture image data of a viewable zone including a wheel and a fuselage of the aircraft.

A method can comprise capturing image data using an image sensor of an exterior camera system of an aircraft; determining, by one or more processors of the exterior camera system, a first contrast of at least a portion of the captured image data; evaluating, by the one or more processors, whether the first contrast is less than a threshold contrast level; and outputting, in response to determining that the first contrast is less than the threshold contrast level, an initiate heating command configured to initiate heating of a camera window positioned between the image sensor and an exterior of the aircraft.

The method of the preceding paragraph can optionally include, additionally and/or alternatively, any one or more of the following features, configurations and/or additional components:

Outputting, in response to the first contrast being greater than or equal to the threshold contrast level, a terminate heating command configured to terminate heating of the camera window.

The determined contrast can be a contrast along an edge of a known object within the captured image data.

Edge-detection can be used to determine and evaluate the first contrast along an edge of a known object within the captured image data.

The determined contrast can be an average contrast of the image data.

Determining a second contrast of the at least a portion of the captured image data at point in time after the initiate heating command has been output; determining a third contrast of the at least a portion of the captured image data at point in time after the second contrast is determined; and evaluating whether the third contrast is greater than the second contrast.

Outputting, in response to the third contrast being equal to the second contrast, a terminate heating command configured to terminate heating of the camera window.

Outputting, in response to the third contrast being equal to the second contrast and the third contrast being above the contrast threshold level, a terminate heating command configured to terminate heating of the camera window.

The threshold level can be a predetermined threshold level.

The heating command can be output to a heater control system.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An exterior camera system of an aircraft comprising:
an image sensor configured to capture image data; and
one or more processors configured to:
determine a first contrast of at least a portion of the captured image data;
evaluate whether the first contrast is less than a threshold contrast level; and
output, in response to the first contrast being less than the threshold contrast level, an initiate heating command configured to initiate heating of a camera window positioned between the image sensor and an exterior of the aircraft.

2. The exterior aircraft camera system of claim 1, wherein the processor is further configured to output, in response to the first contrast being greater than or equal to the threshold contrast level, a terminate heating command configured to terminate heating of the camera window.

3. The exterior aircraft camera system of claim 1 or 2, wherein the determined contrast is a contrast along an edge of a known object within the captured image data.

4. The exterior aircraft camera system of claim 4, wherein edge-detection is used to determine and evaluate the first contrast along an edge of a known object within the captured image data.

5. The exterior aircraft camera system of claim 1 or 2, wherein the determined contrast is an average contrast of the image data.

6. The exterior aircraft camera system of any preceding claim, wherein the one or more processors are further configured to:
determine a second contrast of the at least a portion of the captured image data at point in time after the initiate heating command has been output;
determine a third contrast of the at least a portion of the captured image data at point in time after the second contrast is determined; and
evaluate whether the third contrast is greater than the second contrast.

7. The exterior aircraft camera system of claim 6, wherein the one or more processors are further configured to output, in response to the third contrast being equal to the second contrast, a terminate heating command configured to terminate heating of the camera window.

8. The exterior aircraft camera system of claim 6 or 7, wherein the one or more processors are further configured to output, in response to the third contrast being equal to the second contrast and the second contrast being above the contrast threshold level, a terminate heating command configured to terminate heating of the camera window.

9. A method comprising:
capturing image data using an image sensor of an exterior camera system of an aircraft;
determining, by one or more processors of the exterior camera system, a first contrast of at least a portion of the captured image data;
evaluating, by the one or more processors, whether the first contrast is less than a threshold contrast level; and
outputting, in response to determining that the first contrast is less than the threshold contrast level, an initiate heating command configured to initiate heating of a camera window positioned between the image sensor and an exterior of the aircraft.

10. The method of claim 9, further comprising outputting, in response to the first contrast being greater than or equal to the threshold contrast level, a terminate heating command configured to terminate heating of the camera window.

11. The method of claim 9 or 10, wherein the determined contrast is a contrast along an edge of a known object within the captured image data.

12. The method of claim 9 or 10, wherein the determined contrast is an average contrast of the image data.

13. The method of any one of claims 9-12, further comprising:
determining a second contrast of the at least a portion of the captured image data at point in time after the initiate heating command has been output;
determining a third contrast of the at least a portion of the captured image data at point in time after the second contrast is determined; and
evaluating whether the third contrast is greater than the second contrast.

14. The method of claim 13, further comprising outputting, in response to the third contrast being equal to the second contrast, a terminate heating command configured to terminate heating of the camera window.

15. The method of claim 13 or 14, further comprising outputting, in response to the third contrast being equal to the second contrast and the third contrast being above the contrast threshold level, a terminate heating command configured to terminate heating of the camera window.
